Europäisches Patentamt

European Patent Office

Office européen des brevets

(19)

(11) **EP 0 812 927 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(51) Int Cl.[7]: **C22C 38/58**, C22C 38/44, C22C 38/00

(21) Anmeldenummer: **97890102.3**

(22) Anmeldetag: **16.06.1997**

(54) **Amagnetische, korrosionsbeständige Legierung für geschweisste Bauteile und daraus gefertigte Bauteile zum Einsatz bei kryogener Temperatur**

Non-magnetic, corrosion resistant alloy for welded parts, and so produced parts for use at cryogenic temperatures

Alliage amagnétique résistant à la corrosion pour pièces soudées et pièces fabriquées dans cet alliage pour utilisation à températures cryogéniques

(84) Benannte Vertragsstaaten:
**AT BE CH DE DK ES FI FR GB GR IE IT LI LU NL PT SE**

(30) Priorität: **14.06.1996 AT 104996**

(43) Veröffentlichungstag der Anmeldung:
**17.12.1997 Patentblatt 1997/51**

(73) Patentinhaber: **BÖHLER Edelstahl GmbH
A-8605 Kapfenberg (AT)**

(72) Erfinder:
• **Hochörtler, Günter, Dr.
8605 Kapfenberg (AT)**
• **Huber, Raimund
8605 Kapfenberg (AT)**

(74) Vertreter: **Wildhack, Helmut, Dipl.-Ing. Dr.
Patentanwälte Dipl.-Ing. Leo Brauneiss,
Dipl.-Ing. Dr. Helmut Wildhack,
Dipl.-Ing. Dr. Gerhard Jellinek,
Landstrasser Hauptstrasse 50
1030 Wien (AT)**

(56) Entgegenhaltungen:
**US-A- 3 854 938          US-A- 4 675 156**

• **PATENT ABSTRACTS OF JAPAN vol. 95, no. 002, 31.März 1995 & JP 06 306545 A (NIPPON STEEL CORP.), 1.November 1994,**
• **PATENT ABSTRACTS OF JAPAN vol. 14, no. 232 (C-719), 17.Mai 1990 & JP 02 057668 A (KOBE STEEL LTD.), 27.Februar 1990,**

## Beschreibung

Die Erfindung betrifft eine korrosionsbeständige Legierung mit guter Schweißeignung und hoher Zähigkeit, hoher Festigkeit sowie stabil amagnetischen Eigenschaften bei Temperaturen von geringer als 5° K.

Weiters bezieht sich die Erfindung auf die Verwendung der Legierung und auf einen amagnetischen geschweißten, eine Wandstärke im Schweißbereich von größer als 5,1 mm aufweisenden Bauteil mit hohen mechanischen Materialwerten bei kryogener Temperatur.

Eine Tieftemperaturtechnik mit Arbeitstemperaturen unter 5° K findet in der Forschung und Entwicklung sowie insbesondere bei der Leitung hoher elektrischer Ströme in zunehmendem Maße Verwendung. Eine praktisch verlustfreie Stromleitung erfolgt nämlich in Werkstoffen, wenn diese bis nahe an den absoluten Nullpunkt abgekühlt werden. Dieses zumeist sprunghafte Verschwinden des elektrischen Widerstandes eines Leiters nennt man Supraleitung.

Eine Supraleitung kann beim elektrischen Energietransport genutzt werden und ist Voraussetzung für eine Erstellung von Verfahren sowie von Magneten mit höchsten Feldstärken, zum Beispiel in Synchrotronanlagen bzw. Teilchenbeschleuniger. Für eine Halterung von Bauteilen in derartigen Anlagen ist dabei erforderlich, daß diese Konstruktionselemente hochfest sind und auch bei Kryogenbedingungen eine hohe Zähigkeit aufweisen, weil bei einer Materialversprödung (sprunghafter Zähigkeitsübergang in den spröden Zustand mit sinkender Temperatur) und bei einer Stoßbelastung des Teiles große Bruchgefahr desselben besteht. Weiters ist für diese Teile der hohen magnetischen und elektrischen Felder wegen ein durchgehend stabiles amagnetisches Verhalten des Werkstoffes erforderlich. Dies bedeutet, daß auch bei Temperaturen bzw. Arbeitstemperaturen nahe dem absoluten Nullpunkt die Legierung vollkommen austenitisch, das heißt, in Form einer kubisch - flächenzentrierten Kristallstruktur, vorzuliegen hat und daß diese Struktur auch bei oftmaligem Abkühlen und auch bei einer Verformung des Werkstoffes bei Betriebstemperatur erhalten bleiben muß.

Zusätzlich zu den mechanischen und Gefügeeigenschaften ist es wichtig, daß die Teile korrosionsbeständig sind, daß also auf Grund der Legierungstechnik bzw. der Zusammensetzung ununterbrochen eine Passivierung der Teiloberfläche erfolgt. Darüber hinaus ist für eine Herstellung von Teilen, beispielsweise von sogenannten " LHC-Komponenten eines Teilchenbeschleunigers, eine Schweißeignung von besonderer Wichtigkeit. Unter dem Begriff Schweißeignung ist nicht nur ein gutes Fließen des Werkstoffes bei geringer Schlackenbildung während eines Schutzgasschweißprozesses bei optimierter Streckenergie zu verstehen, sondern es muß auch darunter im gegebenen Fall eine Vermeidung von Ferritausscheidungen in der Schweiße und in der wärmebeeinflußten Zone, insbesondere im Wurzelbereich der Schweißverbindung, subsummiert werden. Ferritausscheidungen werden insbesondere bei geometrisch langen mehrlagigen Schweißungen auf Grund überlagerter Wärmebeaufschlagungen und dergleichen Spannungen in der Schweißnaht und im durch die Schweißenergie wärmebeeinflußten Bereich gebildet.

Für eine Legierung, eine Verwendung der Legierung und einen Bauteil der eingangs genannten Art liegen also eine Vielzahl von koinzidierten Forderungen vor, die durch bekannte legierungstechnische Maßnahmen nicht erfüllbar erscheinen.

Es ist aus den Chemical Abstracts 101:15 587 9 w & Jpn Kokai Tokkyo Koho JP 59 104 455 eine hochzähe Legierung mit hoher Korrosionsbeständigkeit für Tieftemperaturanwendungen bekannt, welche in weiten Grenzen erhöhte Stickstoffkonzentrationen sowie hohe Mangan- und Chromgehalte aufweist, jedoch im wesentlichen nickelfrei ist. Diese Legierung besitzt zwar eine hohe Stickstofflöslichkeit, jedoch können eine ausreichende Austenitstabilisierung bei tiefen Temperaturen bei einer Verformung und eine gute Schweißeignung nicht erreicht werden.

Für Konstruktionsteile von elektrischen Supraleitungsmagneten ist ebenfalls aus den Chemical Abstracts 107: 221 381 e & Jpn Kokai Tokkyo Koho JP 62047 428 eine Legierung enthaltend im wesentlichen Stickstoff, Nickel, Mangan, Chrom, Rest Eisen bekannt, wobei Kohlenstoff, Stickstoff, Nickel sowie Schwefel und Phosphor in bestimmten Relationen einzustellen sind. Dieser, einen hohen Mangangehalt aufweisende Werkstoff besitzt jedoch eine geringe Korrosionsbeständigkeit, weil sich die Passivierungsschicht an der Oberfläche als instabil darstellt und ist nicht im erforderlichen Ausmaß schweißgeeignet.

Eine hochfeste und zähe Legierung für eine Arbeitstemperatur von 4,2 °K ist in den Chemical Abstracts 102: 170 620 n & Jpn Kokai Tokkyo Koho JP 60013.063 offenbart. Es werden in diesem Dokument weite Bereiche der Legierungselemente Stickstoff, Mangan sowie Chrom des austenitischen rostfreien Stahls angesehen und als wesentliches Merkmal der Legierung, bei einer in Grenzen vorgeschriebenen Nlckelkonzentration der Gehalt von Chrom + Mangan nach unten begrenzt. Ein derartig zusammengesetzter Werkstoff ist bei hohen Anforderungen nicht ausreichend korrosionsbeständig und auf Grund von Poren- und Schlackenbildung wenig schweißgeeignet.

Das Dokument US-A-3 854 938 offenbart eine austenitische Legierung mit einer Zusammensetgung in Gew.-% von : C:≤0,1 ; Mn: 7,5-16.0; Si:≤ 1,0 ; Cr : 17,5-26,0; Ni: 5,0-17,0 ; Mo: 0,75-4,0; N:0,2-3,8; Rest Fe und undvermeidbare Verunreinigungen.

Ausgehend vom Stand der Technik ist es Aufgabe der Erfindung, eine austenitische, korrosionsbeständige Legierung der eingangs genannten zu schaffen, welche derart zusammengesetzt ist, daß der Werkstoff im Kryogenbereich, auch nach oftmaligen Kühlzyklen bzw. im aussetzebdeb Betrieb einer Anlage, eine hohe Festigkeit sowie eine große Zähigkeit für Stoßbelastungen und eine hohe Zeitstandsfestigkeit aufweist, hohe Korrosionsbeständigkeit besitzt, stabil amagnetisch auch bei einer Verformung bei tiefen Temperaturen ist bzw. bleibt und gute Schweißeignung hat, wobei ein gutes Fließen des Werkstoffes bei geringer Schlackenbildung und eine weitgehende Vermeidung von Ferritausscheidungen, insbesondere im Wurzelbereich einer längeren mehrlagigen Schweißnaht, wichtige Kriterien der Schweißeignung darstellen.

Ein weiteres Ziel der Erfindung ist die Verwendung einer Legierung für mehrlagig geschweißte Bauteile mit obigem Eigenschaftsprofil.

Schließlich liegt der Erfindung noch die Aufgabe zugrunde, einen, obige Materialeigenschaften aufweisenden amagnetischen, geschweißten Bauteil mit großer Wandstärke im Schweißbereich, der bei Temperaturen unter 5°K, insbesondere für Teilchenbeschleuniger, eingesetzt wird, zu schaffen.

Die Aufgabe wird erfindungsgemäß dadurch gelöst, daß die Legierung eine Zusammensetzung in Gew.-% von

C gleich/kleiner 0,029
Si 0,20 bis 0,79, vorzugsweise 0,3 bis 0,5
Mn 11,10 bis 12,90, vorzugsweise 11,8 bis 12,4
P gleich/kleiner 0,029
S 0,0016 bis 0,0059, vorzugsweise 0,0021 bis 0,0049
Cr 18,4 bis 19,9, vorzugsweise 19,0 bis 19,5
Mo 0,51 bis 1,39, vorzugsweise 0,81 bis 1,19
Ni 10,1 bis 11,9, vorzugsweise 10,7 bis 11,3
V max 0,19 , vorzugsweise max 0,08
W max 0,9, vorzugsweise max 0.49
Co bis 6,0
Al max 0,016, vorzugsweise max 0,009
N 0,28 bis 0,37, vorzugsweise 0,3 bis 0,34

Rest Eisen und herstellungsbedingte Verunreinigungen aufweist.

Ein weiteres Ziel der Erfindung wird durch eine Verwendung obiger Legierung für die Herstellung von mehrlagig, insbesondere mit mehr als drei Lagen und mindestens einer ununterbrochenen Naht mit einer Länge von größer als 101 mm, insbesondere größer als 251 mm, geschweißten amagnetischen Bauteilen mit hoher Zähigkeit und hoher Festigkeit bei Arbeitstemperaturen unter 5°K erreicht.

Die mit der Erfindung erzielten Vorteile liegen insbesondere darin, daß durch die chemische Zusammensetzung der Legierung synergetisch die jeweilige Wirkung und die Wechselwirkungen der Legierungselemente derart abgestimmt bzw. genutzt werden, daß der Werkstoff gleichzeitig eine hervorragende Schweißeignung sowie gute mechanische Eigenschaften, hohe Korrosionsbeständigkeit und Ferritfreiheit bei Kryogenbedingungen aufweist. Dieses vorteilhaft günstige Eigenschaftsprofil des Werkstoffes ist jedoch, wie gefunden wurde, nur in einem engen Konzentrationsbereich der jeweiligen Legierungselemente im Stahl erreichbar, wodurch eine besonders sorgsame, dem Fachmann jedoch bekannte Er- sowie gegebenenfalls Umschmelztechnik angewendet werden muß.

Bei der erfindungsgemäßen Legierung ist es wichtig, daß die Kohlenstoffkonzentration einen Wert von 0,029 Gew.-% nicht übersteigt. Höhere Kohlenstoffwerte führen nämlich zu einer Bildung feiner Karbide, die meist im Bereich der Korngrenzen angereichert sind und die mechanischen Eigenschaften des Materials nachteilig beeinflussen. Weiters werden dadurch eine unerwünschte Ferritausscheidung im Wurzelbereich einer mehrlagigen Schweißnaht und insbesondere ein interkristalliner Korrosionsangriff begünstigt.

Das Desoxidationselement Silizium ist ein wirkungsvoller Ferritbildner und soll in der Legierung in einem Gehaltsbereich von 0,2 bis 0,79 Gew.-% vorliegen. Geringere Si-Gehalte als 0,2 % verschlechtern den oxidischen Reinheitsgrad und höhere Gehalte als 0,79 % begünstigen Ferritausscheidungen.

Mangan als eines der Hauptlegierungselemente ist in einem äußerst engen Konzentrationsbereich von 11,1 bis 12,9 Gew.-% vorgesehen. Von der Mangankonzentration werden die wichtigsten Eigenschaften derartiger Legierungen in hohem Maße beeinflußt. Zur Optimierung des Eigenschaftsprofiles des erfindungsgemäßen Stahles ist eine Mindestkonzentration von 11,1 Gew.-% Mangan erforderlich, weil niedrigere Gehalte eine Verringerung der Stickstofflöslichkeit und der Austenitstabilisierung bewirken. Mangangehalte über 12,9 Gew.-% verschlechtern die Korrosionsbeständigkeit des Werkstoffes wirkungsvoll, wobei die Ursachen dafür wissenschaftlich noch nicht vollkommen geklärt sind. Weiters besteht bei höheren Gehalten an Mangan und Kohlenstoff die Gefahr, daß bei Tiefkühlung und Verformung des Materials sich stellenweise das kubisch- flächenzentrierte Gamma-Gitter diffusionslos in ein tetragonal verzerrtes, kubisch raumzentriertes martensitisches Alpha-Strich-Gitter, welches magnetisierbar ist, umwandelt.

Chrom ist das Gefüge der Legierung betreffend eine Ferritbildner, bewirkt jedoch mit austenitbildendem Mangan die gewünschte Lösung von Stickstoff im Stahl. Weiters wird durch hohe Chromgehalte eine Korrosionsbeständigkeit des Werkstoffes erreicht bzw. angehoben, welche durch Molybdän weiters entscheidend verbessert werden kann. Im Hinblick auf die Aktivität der austenitbildenden Elemente der erfindungsgemäßen Legierung wurde gefunden, daß der Gehalt an ferritbildendem Chrom höchstens 19,9 Gew.-% betragen soll, weil höhere Gehalte sich nachteilig auf eine Austenitstabilisierung auswirken können. Durch niedrigere Konzentrationswerte von Chrom als 18,4 % werden zu geringe Stickstofflöslichkeit und nicht ausreichende Korrosionsbeständigkeit verursacht.

Nickel ist ein stark austenitbildendes Element, verringert jedoch die Stickstofflöslichckeit der Legierung. Um eine stabilaustenitische Gefügestruktur zu erreichen, wurde bei umfangreichen Untersuchungen gefunden, daß für eine Gamma-Stabilisierung ein Nickelgehalt von mindestens 10,1 Gew.-% im Werkstoff vorliegen muß, wobei erst Gehalte von höher als 11,9 Gew.-% die Stickstofflöslichkeit in unerwünschtem Maße verringern und einige Materialeigenschaften nachteilig beeinflussen.

Kobalt kann zur Unterstützung der Austenitstabilisierung mit Gehalten bis 6 Gew.-%, gegebenenfalls zur Substituierung von Nickel, vorgesehen sein.

Um nun ein gefordertes Eigenschaftsprofil des Werkstoffes erreichen zu können, ist es notwendig und höchst wichtig, durch legierungstechnische Maßnahmen einen Stickstoffgehalt im Werkstoff von mindestens 0,28 Gew.-% und höchstens 0,37 Gew.-% einzustellen. Beim Schweißen unter Schutzgas können Stickstoffverluste auftreten, so daß es vorteilhaft ist, den Stickstoffgehalt im Stahl in einem Bereich von 0,3 bis 34 Gew.-% vorzusehen.

Zur Verbesserung der Schweißeignung der Legierung hat es sich überraschend gezeigt, daß Schwefel im Konzentrationsbereich von 0,002 bis 0,005 Gew.-% besonders vorteilhaft wirkt. Eine Verschlechterung des sulfidischen Reinheitsgrades, was vom Fachmann befürchtet wurde, wird jedoch erst ab einem Gehalt von größer als 0,005 Gew.- % wirksam. Bei umfangreichen Schweißversuchen konnte festgestellt werden, daß durch das Legierungselement Schwefel im angegebenen Konzentrationsbereich ein gutes Fließen des Werkstoffes mit guter Reinheit bzw. mit äußert geringer Schlackenbildung trotz der hohen Mangangehalte gegeben war. Mehrlagige Schweißverbindungen zeigten bei vollkommener Porenfreiheit eine wesentlich verbesserte Verbindung der Auftragsraupen mit dem Grundwerkstoff und eine gute Schmelz- Überlappung.

Auf Grund der chemischen Zusammensetzung der erfindungsgemäßen Legierung mit engen Grenzen der Konzentration der jeweiligen Legierungselemente ist diese besonders vorteilhaft für die Herstellung von mehrlagig, insbesondere mit mehr als drei Lagen und mindesens einer ununterbrochenen Naht mit einer Länge von größer als 101 mm, insbesondere größer als 251 mm, geschweißten amagnetischen Bauteilen mit hoher Zähigkeit und hoher Festigkeit bei Arbeitstemperaturen unter 5° K verwendbar. Synergetisch werden durch eine genau abgestimmte Legierungstechnik des erfindungsgemäß verwendeten Werkstoffes nicht nur hohe mechanische Werte bei Kryogenbedingungen und gute Korrosionsbeständigkeit, sondern auch qualitativ besonders hochwertige Schweißverbindungen der erstellten Bauteile erreicht. Insbesondere eine bei mehrlagigen langen Schweißnähten im Wurzelbereich der Schweißnaht bzw. der wärmebeeinflußten Zone vielfach auftretende Ferritausscheidung kann bei den geschweißen Bauteilen aus der neuen Legierung weitestgehend vermieden werden, wodurch deren Eignung für Komponenten in einem Teilchenbeschleuniger besonders vorteilhaft ist.

Die Qualität der Bauteile kann weiters gefördert werden, wenn der verwendete legierungsgemäße Werkstoff mindestens 4-fach warmverformt und/oder geschweißt und bei einer Temperatur von mindestend 1010° C, höchstens jedoch 1120 °K, lösungsgeglüht, abgeschreckt und gegebenenfalls bei RT oder vorzugsweise in einem Temperaturbereich von 90°C bis 600° C kaltverformt, insbesondere zumindest 5% kaltverformt ist.

Die weitere Aufgabe der Erfindung, nämlich einen amagnetischen, geschweißten, im Schweißbereich dickwandigen Bauteil für einen Einsatz bei Kryogenbedingungen, insbesondere für Teilchenbeschleuniger, zu schaffen, wird durch eine oben angeführte Werksstoffzusammensetzung und mindestens einer mehrlagig erstellten Schweißnaht mit einer Länge von größer als 101 mm, vorzugsweise von größer als 251 mm, erreicht. Die Vorteile eines derartigen erfindungsgemäßen Bauteiles liegen insbesondere darin, daß dieser auch bei Stoßbelastungen im praktischen Einsatz hohe Stabilität und gute Qualität der Verbindung der Teilkomponenten aufweist, wobei lange und mehrlagig ausgeführte, dicke zähfeste Schweißnähte eine Erstellung von hochbeanspruchten Bauteilen ermöglicht. Durch die chemische Zusammensetzung des Grundwerkstoffes werden auch beim Aufschweißen von vielen Lagen eine gute Verbindung mit dem Grundwerkstoff sowie eine gute Überlappung und eine riß- und porenfreie Naht erreicht, so daß auch im Bereich der Verbindungen des Bauteiles hohe Materialgüte und dadurch der Vorteil einer hohen Materialbelastbarkeit bei großer Sicherheit gegeben sind.

Besonders vorteilhaft ist es, wenn der Schweißzusatzwerkstoff eine Zusammensetzung in Gew.-% von

C gleich/kleiner 0,029
Si bis 1,31, vorzugweise bis 0,95
Mn min 5,0, vorzugsweise min 7,0,
S gleich/kleiner 0,008, vorzugsweise gleich/kleiner 0,0048
Cr.max 26,0, vorzugsweise max 22,8,
Mo min 0,61, vorzugsweise min 1,41,
Ni min 9,5, vorzugsweise min 10,1,

Co bis 6,0
Al max 0,014
N 0,16 bis 0,39, vorzugsweise 0,21 bis 0,35

Rest Eisen und herstellungsbedingte Verunreinigungen mit der Maßgabe, daß der Verhältniswert

$$K = \frac{Cr + 0,9\ Mn}{N}$$

mindestens 80, vorzugsweise mindestens 101 beträgt, aufweist.

Dadurch erfolgt eine Abstimmung des Schweißzusatzwerkstoffes auf das Grundmaterial des Bauteiles, wodurch die Verbindungsqualität der Komponenten des Bauteiles weiters gesteigert wird.

Es hat sich als besonders günstig herausgestellt, wenn die Schweißverbidung mittels Schutzgasschweißung, insbesondere WIG-Schweißung, gebildet ist. Bei der WIG- (WOLFRAM-INERTGAS) oder GTAW- bzw. TIG-( GAS-TUNGSTEN-ARC-W ELDING) Schweißung brennt im wesentlichen in einem Inertgasstrom ein Lichtbogen zwischen einer Wolframelektrode und dem Schweißbad, wobei in den Lichtbogen ein Schweißzusatzwerkstoff eingebracht, dieser geschmolzen und durch diesen die Schweißraupe oder Schweißlage gebildet wird. Bei diesem Schmelzschweißen treten zumeist Stickstoffverluste im höheren Maß auf, die dem Stand der Schweißtechnik gemäß durch ein Zumischen von Stickstoffgas zum Inertgas verhindert oder zumindest verkleinert werden können.

Nachfolgend soll an Erprobungsergebnissen die Erfindung näher dargestellt werden:

Es zeigen

Tab.1 die chemische Zusammensetzung der erfindungsgemäßen Legierung
Fig. 1a Umschmelzspuren und
Fig. 2a eine V-Naht am bzw. zwischen Flachmaterial ( Grundmaterial)

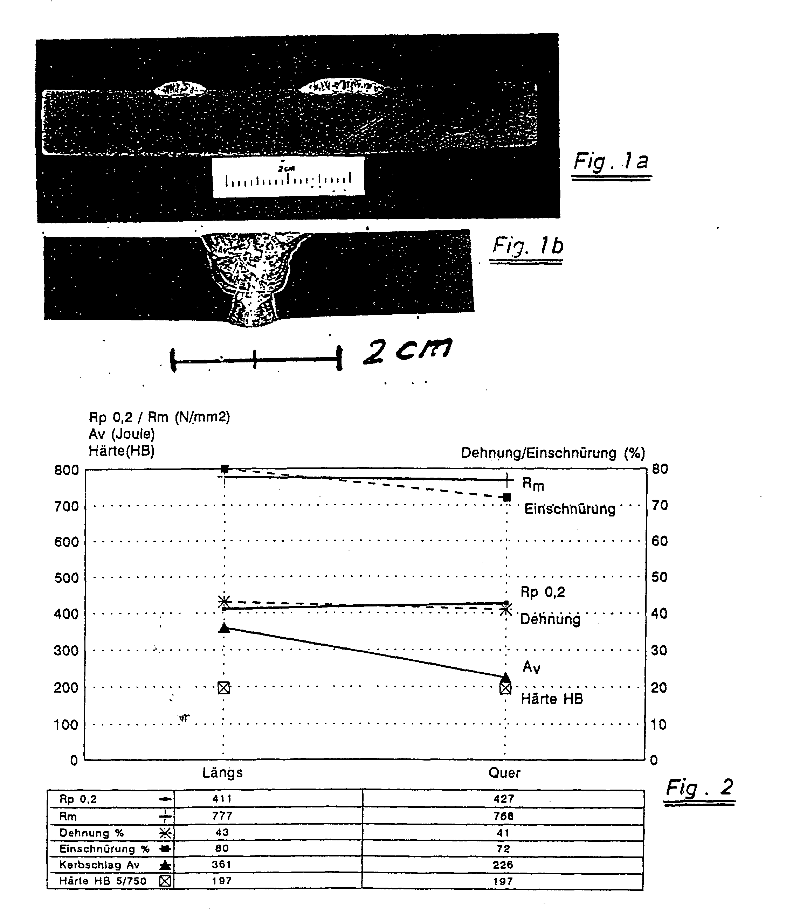

Fig. 2 Ergebnisse der mechanischen Prüfung des Werkstoffes

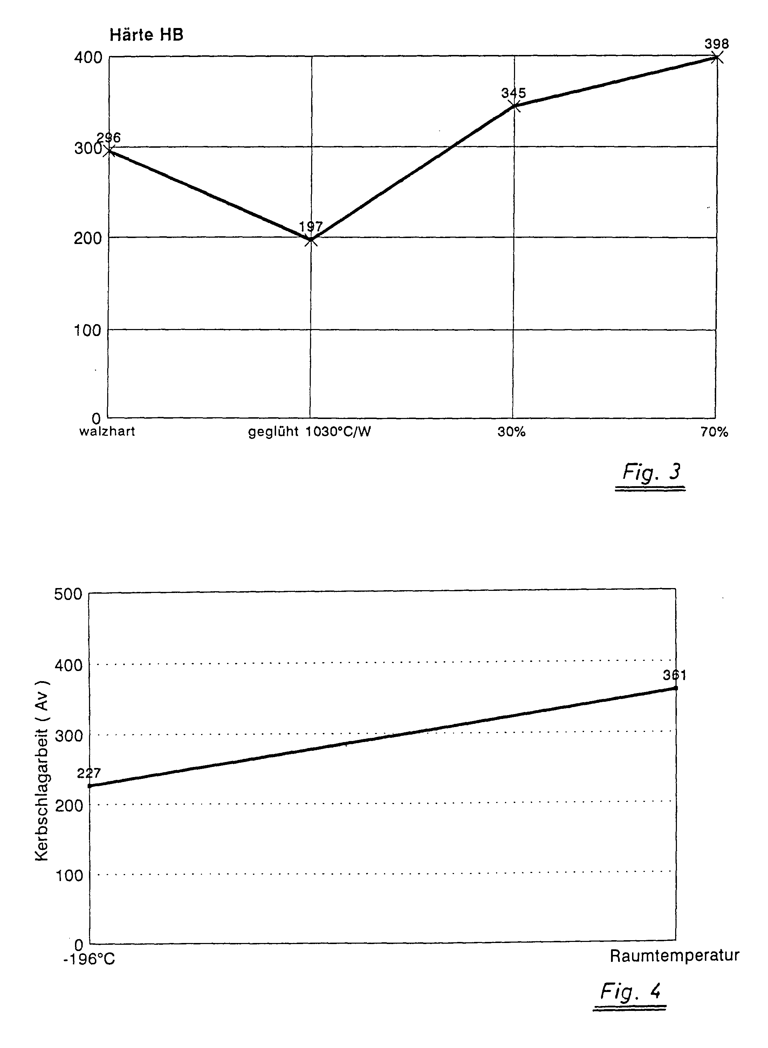

Fig. 3 Härtewerte der Legierung bei unterschiedlichen Zuständen
Fig. 4 Kerbschlagarbeit in Anhängigkeit von der Temperatur

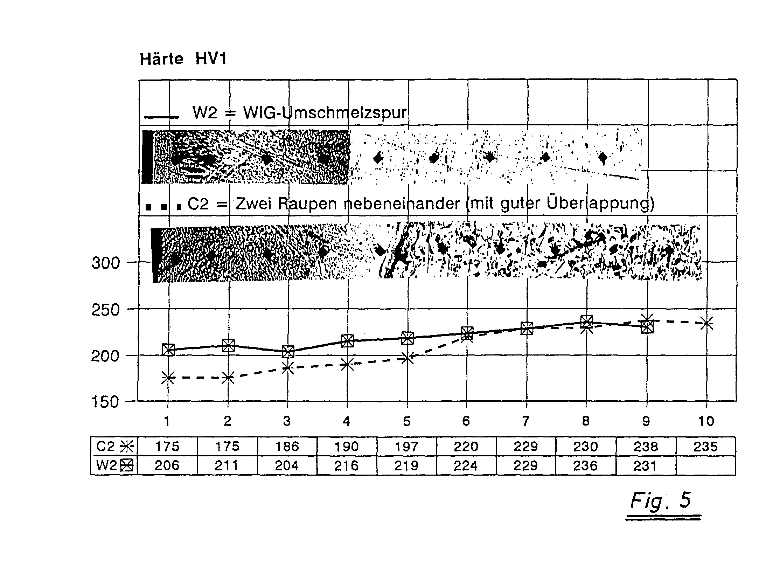

Fig. 5 Härteverlauf von einer Umschmelzspur und von zwei überlappenden Raupen und den Übergang zum Grundmaterial

Eine Schmelze mit einer Zusammensetzung gemäß Tabelle 1 : Fertigprobe wurde in einem Ofen erschmolzen und daraus ein Block mit einer Kantenlänge von 300 mm hergestellt. Der Block wurde anschließend zu Blech mit einer Dicke von 40 mm, 20 mm und 10 mm warmverformt, dieses wärmebehandelt, wonach eine Stückanalyse (Tab.1) erfolgte. Am Blech mit einer Wandstärke von ca 10 mm wurden die in Fig. 1 bis 5 dargestellten Ergebnisse ermittelt.

Fig. 1a zeigt zwei Umschmelzspuren von Schweißzusatzwerkstoffen aus den Versuchsreihen, die mit unterschiedlicher Streckenenergie aufgebracht wurden. Fig. 1b zeigt eine V-Naht zwischen zwei 10 mm starken Blechen. Die Bleche wiesen vor dem Verschweißen einen Wurzelabstand von 4 mm bei einer Parallelhöhe von 2 mm auf, worauf in V-Form die Blechenden mit 60° erweitert waren. Nach einer Wurzelschweißlage nach dem WIG-Verfahren wurde mit erhöhter Schweißstromstärke eine zweite Lage auf diese aufgebracht, wonach mit wiederum erhöhter Stromstärke Füllagen in den V-Bereich eingeschmolzen wurden. Abschließend erfolgte eine Aufbringung von Decklagen mit verminderter Leistung.

Das Grundmaterial mit einer Zusammensetzung gemäß Tab. 1 besaß nach einer Verformung auf eine Wandstärke von ca 10 mm und einer Glühung bei 1030 °C mit anschließendem Abschrecken des Materials in Wasser in Längs- und Querrichtung die in Fig. 2 dargestellten mechanischen Eigenschaften.

In Fig. 3 sind die Härtewerte des Probematerials im walzharten, im wärmebehandelten und im danach mit unterschiedlichem Verformungsgrad ( 30% und 70 %) kaltverformten Zustand dargestellt. Deutlich ist ein Härteanstieg und folglich ein Festigkeitsanstieg des Werkstoffes mit steigender Kaltverformung gegeben, wobei auch eine Kaltverformung der höheren Zähigkeitsergebnisse wegen bei Temperaturen oberhalb der Raumtemperatur erfolgen kann.

Fig. 4 zeigt die Kerbschlagarbeit von Proben im Bereich von Raumtemperatur bis ca 77 °K bzw. - 196 °C. Auch bei weiterem Absenken der Temperatur in den Bereich von 5 °K und niedriger wurde kein Übergang der Kerbschlagzähigkeit des Materials beobachtet, wobei die in diesem Bereich gemessenen Werte 170 bis 180 °J betrugen.

In Fig. 5 sind die Versuchsergebnisse betreffend eine Umschmelzspur am Grundmaterial und zwei überlappende Schweißraupen auf einem erfindungsgemäß zusammengesetzten Grundwerkstoff dargestellt. Bei einer Umschmelzspur ( W2) weist der Schweißzusatzwerkstoff eine höhere, von einer durch das Substrat bedingten Abschreckwirkung verursachte Härte auf, wohingegen eine Anlaßwirkung durch ein Aufbringen einer zweiten Raupe ( C2) zu geringeren Härtewerten führt. Eine porenfreie Schmelzschweißverbindung mit dem Basismaterial war in jedem Fall gegeben.

Am Grundwerkstoff und im Schweißnahtbereich mit einer viellagigen Schweißraupe erfolgten magnetometrische Messungen. Es hat sich gezeigt, daß bei einer Feldstärke H von größer als 1000 Oe die relative Permeabilität vom Grundwerkstoff 0,001 bis 0,003 betrug und im Schweißbereich, das sind die Schweißlagen und die wärmebeeinflußten Zonen, eine solche von höchstens 0,0045 gegeben war.

Tab. 1

| p | C | Si | Mn | P | S | Cr | Mo | Ni | W | Cu | Al | N |
|---|---|---|---|---|---|---|---|---|---|---|---|---|
| Fertigprobe | 0,027 | 0,40 | 12,03 | 0,014 | 0,003 | 19,25 | 0,85 | 10,89 | 0,11 | 0,11 | 0,009 | 0,31 |
| Stückanalyse | 0,028 | 0,42 | 11,99 | 0,014 | 0,003 | 19,20 | 0,86 | 10,87 | 0,11 | 0,11 | 0,008 | 0,32 |

**Patentansprüche**

1. Austenitische korrosionsbeständige Legierung mit guter Schweißeignung und hoher Zähigkeit, hoher Festigkeit sowie stabil amagnetischen Eigenschaften bei Temperaturen von geringer als 5°K, **gekennzeichnet durch** eine Zusammensetzung in Gew.-% von

   C gleich/kleiner 0,029
   Si 0,20 bis 0,79, vorzugsweise 0,3 bis 0,5
   Mn 11,10 bis 12,90, vorzugsweise 11,8 bis 12,4
   P gleich/kleiner 0,029
   S 0,0016 bis 0,0059, vorzugsweise 0,0021 bis 0,0049
   Cr 18,4 bis 19,9, vorzugsweise 19,0 bis 19,5
   Mo 0,51 bis 1,39, vorzugsweise 0,81 bis 1,19
   Ni 10,1 bis 11,9, vorzugsweise 10,7 bis 11,3
   V max 0,19, vorzugsweise max 0,08
   W max 0,9 , vorzugsweise max 0,49
   Co bis 6,0
   Al max 0,016 , vorzugsweise max 0,009
   N 0,28 bis 0,37 , vorzugweise 0,3 bis 0,34

   Rest Eisen und unvermeidbare Verunreinigungen.

2. Verwendung einer austenitischen korrosionsbeständigen Legierung mit einer Zusammensetzung in Gew.-% von

   C gleich/kleiner 0,029
   Si 0,20 bis 0,79, vorzugsweise 0,3 bis 0,5
   Mn 11,10 bis 12,90, vorzugsweise 11,8 bis 12,4
   P gleich /kleiner 0,029
   S 0,0016 bis 0,0059, vorzugsweise 0,0021 bis 0,0049
   Cr 18,4 bis 19,9, vorzugweise 19,0 bis 19,5
   Mo 0,51 bis 1,39, vorzugsweise 0,81 bis 1,19
   Ni 10,1 bis 11,9, vorzugsweise 10,7 bis 11,3
   V max 0,19 , vorzugweise max 0,08
   W max 0,9 , vorzugsweise max 0,49
   Co bis 6,0
   Al max 0,016, vorzugsweise max 0,009
   N 0,28 bis 0,37, vorzugsweise 0,3 bis 0,34

   Rest Eisen und unvermeidbare Verunreinigungen als Werkstoff für die Herstellung von mehrlagig, insbesondere mit mehr als drei Lagen und mindestens einer ununterbrochenen Naht mit einer Länge von größer als 101 mm, insbesondere größer als 251 mm,geschweißten amagnetischen Bauteilen mit hoher Zähigkeit und hoher Festigkeit bei Arbeitstemperaturen unter 5°K.

3. Verwendung nach Anspruch 2, **dadurch gekennzeichnet, daß** der legierungsgemäße Werkstoff mindestens 4-fach warmverformt und/oder geschweißt und bei einer Temperatur von mindestens 1010 °C, höchstens jedoch 1120°C, lösungsgeglüht, abgeschreckt und gegebenenfalls bei Raumtemperatur oder vorzugsweise in einem Temperaturbereich von 90°C bis 600°C kaltverformt, insbesondere zumindest 5%, kaltverformt ist.

4. Verwendung nach Anspruch 2 oder 3 als Werkstoff für die Herstellung von Bauteilen bzw. Komponenten in einem Teilchenbeschleuniger.

5. Amagnetisches geschweißtes, eine Wandstärke im Schweißbereich von größer als 5,1 mm, insbesondere von größer als 8,1 mm, aufweisendes Bauteil mit hoher Festigkeit und Zähigkeit bei Temperaturen unter 5°K, insbesondere für Teilchenbeschleuniger, **gekennzeichnet durch** eine Werkstoffzusammensetzung gemäß Anspruch 1 und mindestens eine mehrlagig mittels Schweißzusatzwerkstoffes erstellte Schweißnaht mit einer Länge von größer als 101 mm, vorzugsweise von größer als 251 mm.

6. Verwendung eines Schweißzusatzwerkstoffes mit einer Zusammensetzung in Gew.-% von

C gleich/kleiner 0,029
Si bis 1,31, vorzugsweise bis 0,95
Mn min. 5,0 , vorzugsweise min 7,0
S gleich/kleiner 0,008, vorzugweise gleich/kleiner 0,0048
Cr max 26,0, vorzugsweise max 22,8
Mo min 0,61, vorzugsweise min 1,41
Ni min 9,5 , vorzugweise min 10,1
Co bis 6,0
Al max 0,014
N 0,16 bis 0,39, vorzugweise 0,21 bis 0,35

Rest Eisen und unvermeidbare Verunreinigungen mit der Maßgabe, daß der Verhältniswert

$$K = \frac{Cr + 0,9Mn}{N}$$

mindestens 80, vorzugweise mindestens 101 beträgt für die Herstellung amagnetischer Bauteile gemäß Anspruch 5.

7. Bauteil nach Anspruch 5, **dadurch gekennzeichnet, daß** die Schweißverbindung mittels Schutzgasschweißung, insbesondere WIG-Schweißung, gebildet ist.

8. Bauteil nach Anspruch 5 oder 7, **dadurch gekennzeichnet, daß** dieses eine relative Permeabilität von kleiner als 1,0045 bei einer Feldstärke H von größer als 1000 Oe aufweist, wobei der Werkstoff im geglühten Zustand eine Zugfestigkeit Rm von mindestens 750 N/ mm$^2$ sowie eine Kerbschlagarbeit von mindestens 311 J hat und bei kryogener Arbeitstemperatur die Kerbschlagarbeit mindestens 200 J beträgt.

## Claims

1. An austenitic, corrosion-resistant alloy with good weldability and a high level of toughness, high strength and permanently amagnetic properties at temperatures below 5K, **characterised by** the following composition in wt.%:

   C less than/equal to 0.029
   Si 0.20 to 0.79, preferably 0.3 to 0.5
   Mn 11.10 to 12.90, preferably 11.8 to 12.4
   P less than/equal to 0.029
   S 0.0016 to 0.0059, preferably 0.0021 to 0.0049
   Cr 18.4 to 19.9, preferably 19.0 to 19.5
   Mo 0.51 to 1.39, preferably 0.81 to 1.19
   Ni 10.1 to 11.9, preferably 10.7 to 11.3
   V max. 0.19, preferably max. 0.08
   W max. 0.9, preferably max. 0.49
   Co up to 6.0
   Al max. 0.016, preferably max. 0.009
   N 0.28 to 0.37, preferably 0.3 to 0.34

   remainder iron and unavoidable impurities.

2. Use of an austenitic, corrosion-resistant alloy with the following composition in wt.%:

   C less than/equal to 0.029
   Si 0.20 to 0.79, preferably 0.3 to 0.5
   Mn 11.10 to 12.90, preferably 11.8 to 12.4
   P less than/equal to 0.029
   S 0.0016 to 0.0059, preferably 0.0021 to 0.0049
   Cr 18.4 to 19.9, preferably 19.0 to 19.5
   Mo 0.51 to 1.39, preferably 0.81 to 1.19

Ni 10.1 to 11.9, preferably 10.7 to 11.3
V max. 0.19, preferably max. 0.08
W max. 0.9, preferably max. 0.49
Co up to 6.0
Al max. 0.016, preferably max. 0.009
N 0.28 to 0.37, preferably 0.3 to 0.34

remainder iron and unavoidable impurities as a material for manufacturing multilayer-welded, amagnetic components with a high level of toughness and high strength at working temperatures below 5K, in particular with more than three layers and at least one continuous seam having a length greater than 101 mm, in particular greater than 251 mm.

3. Use according to claim 2, **characterised in that** the alloy material is hot-formed and/or welded at least four times and solution heat treated at a temperature of at least 1010°C, but at most 1120°C, quenched and, optionally, cold-formed, in particular at least 5% cold-formed, at room temperature or preferably in a temperature range from 90°C to 600°C.

4. Use according to claim 2 or 3 as a material for manufacturing components or constituents of a particle accelerator.

5. An amagnetic, welded component with a high level of strength and toughness at temperatures below 5K and with a wall thickness in the region of the weld of more than 5.1 mm, in particular more than 8.1 mm, in particular for particle accelerators, **characterised by** a material composition according to claim 1 and at least one weld seam produced with multiple layers by means of a filler material and having a length greater than 101 mm, preferably greater than 251 mm.

6. Use of a filler material with the following composition in wt.%:

C less than/equal to 0.029
Si up to 1.31, preferably up to 0.95
Mn min. 5.0, preferably min. 7.0
S less than/equal to 0.008, preferably less than/equal to 0.0048
Cr max. 26.0, preferably max. 22.8
Mo min. 0.61, preferably min. 1.41
Ni min. 9.5, preferably min. 10.1
Co up to 6.0
Al max. 0.014
N 0.16 to 0.39, preferably 0.21 to 0.35

remainder iron and unavoidable impurities, with the proviso that the ratio

$$K = \frac{Cr + 0.9\ Mn}{N}$$

is at least 80, preferably at least 101 for manufacturing amagnetic components according to claim 5.

7. A component according to claim 5, **characterised in that** the welded joint is formed by means of inert-gas welding, in particular TIG welding.

8. A component according to claim 5 or 7, **characterised in that** it has a relative permeability of less than 1.0045 with a field strength H of greater than 1000 Oe, the material in the annealed state having a tensile strength Rm of at least 750 N/mm$^2$ and a notched-bar impact value of at least 311 J and, at a cryogenic working temperature, having a notched-bar impact value of at least 200 J.

**Revendications**

1. Alliage austénitique résistant à la corrosion et présentant une bonne aptitude au soudage, une ténacité élevée, une résistance élevée ainsi que des propriétés amagnétiques stables à des températures inférieures à 5°K, **ca-**

**ractérisé par** la composition suivante en % en poids :

C inférieur ou égal à 0,029
Si de 0,20 à 0,79, de préférence de 0,3 à 0,5
Mn de 11,10 à 12,90, de préférence de 11,8 à 12,4
P inférieur ou égal à 0,029
S de 0,0016 à 0,0059, de préférence de 0,0021 à 0,0049
Cr de 18,4 à 19,9, de préférence de 19,0 à 19,5
Mo de 0,51 à 1,39, de préférence de 0,81 à 1,19
Ni de 10,1 à 11,9, de préférence de 10,7 à 11,3
V maxi 0,19, de préférence maxi 0,08
W maxi 0,9, de préférence maxi 0,49
Co jusqu'à 6,0
Al maxi 0,016, de préférence maxi 0,009
N de 0,28 à 0,37, de préférence de 0,3 à 0,34

le reste étant du fer et des impuretés inévitables.

2. Utilisation d'un alliage austénitique résistant à la corrosion ayant la composition suivante en % en poids :

C inférieur ou égal à 0,029
Si de 0,20 à 0,79, de préférence de 0,3 à 0,5
Mn de 11,10 à 12,90, de préférence de 11,8 à 12,4
P inférieur ou égal à 0,029
S de 0,0016 à 0,0059, de préférence de 0,0021 à 0,0049
Cr de 18,4 à 19,9, de préférence de 19,0 à 19,5
Mo de 0,51 à 1,39, de préférence de 0,81 à 1,19
Ni de 10,1 à 11,9, de préférence de 10,7 à 11,3
V maxi 0,19, de préférence maxi 0,08
W maxi 0,9, de préférence maxi 0,49
Co jusqu'à 6,0
Al maxi 0,016, de préférence maxi 0,009
N de 0,28 à 0,37, de préférence de 0,3 à 0,34

le reste étant du fer et des impuretés inévitables, comme matière première pour la fabrication de pièces amagnétiques soudées en plusieurs passes, en particulier en plus de trois passes, et avec au moins un cordon ininterrompu d'une longueur supérieure à 101 mm, en particulier supérieure à 251 mm, et présentant une ténacité élevée et une résistance élevée à des températures de travail inférieures à 5°K.

3. Utilisation selon la revendication 2, **caractérisée en ce que** le matériau allié est formé et/ou soudé à chaud au moins à 4 reprises et homogénéisé par recuit de mise en solution à une température d'au moins 1010°C mais de 1120°C au maximum, trempé et le cas échéant formé à froid à la température ambiante ou de préférence dans une plage de température de 90°C à 600°C, en particulier au moins à 5%.

4. Utilisation selon la revendication 2 ou la revendication 3 comme matière première pour la fabrication de pièces ou de composants d'un accélérateur de particules.

5. Pièce amagnétique soudée, présentant une épaisseur de paroi dans la zone de la soudure supérieure à 5,1 mm, en particulier supérieure à 8,1 mm, avec une résistance et une ténacité élevées à des températures inférieures à 5°K, en particulier pour des accélérateurs de particules, **caractérisée par** une composition du matériau suivant la revendication 1 et par au moins un cordon de soudure réalisé en plusieurs passes à l'aide de matière d'apport pour le soudage avec une longueur supérieure à 101 mm, de préférence supérieure à 251 mm.

6. Utilisation d'une matière d'apport pour le soudage avec la composition suivante en % en poids :

C inférieur ou égal à 0,029
Si jusqu'à 1,31, de préférence jusqu'à 0,95
Mn mini 5,0, de préférence mini 7,0

S inférieur ou égal à 0,008, de préférence inférieur ou égal à 0,0048
Cr maxi 26,0, de préférence maxi 22,8
Mo mini 0,61, de préférence mini 1,41
Ni mini 9,5, de préférence mini 10,1
Co jusqu'à 6,0
Al maxi 0,014
N de 0,16 à 0,39, de préférence de 0,21 à 0,35

le reste étant du fer et des impuretés inévitables, à la condition que le rapport

$$K= \frac{Cr + 0,9\ Mn}{N}$$

soit égal à 80 au moins, de préférence à 101 au moins, pour la fabrication de pièces amagnétiques selon la revendication 5.

7.  Pièce selon la revendication 5, **caractérisée en ce que** la liaison soudée est réalisée par soudage sous atmosphère de gaz protecteur, en particulier par soudage WIG.

8.  Pièce selon la revendication 5 ou la revendication 7, **caractérisée en ce qu'**elle présente une perméabilité relative inférieure à 1,0045 à une intensité de champ H supérieure à 1000 Oe, la matière première ayant une résistance à la traction Rm à l'état recuit d'au moins 750 N/mm$^2$ ainsi qu'une énergie absorbée au choc d'au moins 311 J et, à une température de travail cryogénique, l'énergie absorbée au choc est au moins égale à 200 J.

*Fig. 1a*

*Fig. 1b*

|—————|———|————————| **2 cm**

Rp 0,2 / Rm (N/mm2)
Av (Joule)
Härte(HB)

Dehnung/Einschnürung (%)

*Fig. 2*

| | | Längs | Quer |
|---|---|---|---|
| Rp 0,2 | ➛ | 411 | 427 |
| Rm | + | 777 | 766 |
| Dehnung % | ✳ | 43 | 41 |
| Einschnürung % | ◆ | 80 | 72 |
| Kerbschlag Av | ▲ | 361 | 226 |
| Härte HB 5/750 | ⊠ | 197 | 197 |

Härte HB

*Fig. 3*

*Fig. 4*

**Härte HV1**

| | 1 | 2 | 3 | 4 | 5 | 6 | 7 | 8 | 9 | 10 |
|---|---|---|---|---|---|---|---|---|---|---|
| C2 ✳ | 175 | 175 | 186 | 190 | 197 | 220 | 229 | 230 | 238 | 235 |
| W2 ⊠ | 206 | 211 | 204 | 216 | 219 | 224 | 229 | 236 | 231 | |

*Fig. 5*